# EUROPEAN PATENT APPLICATION

(11) **EP 4 455 534 A1**
(43) Date of publication of application: **30.10.2024**
(21) Application number: 24171833.7
(22) Date of filing: 23.04.2024
(51) Int. Cl.: F16N 3/12, F16H 3/44, F16H 57/021, F16H 57/023, F16H 57/08, B25F 5/00

(54) **TRANSMISSION MECHANISM OF POWER TOOL, AND GREASE GUN**

(30) Priority: 23.04.2023 CN 202320953202 U; 04.07.2023 CN 202321746124 U
(71) Applicant: Zhejiang Prulde Electric Appliance Co., Ltd., Jinhua, Zhejiang 321035 (CN)
(72) Inventor: Yang, Chenghao, Jinhua, 321035 (CN)
(74) Representative: karo IP

(57) **Abstract**

Disclosed are a transmission mechanism of a power tool and a grease gun, overcoming the drawback of existing electric grease guns that position shifting is disabled. The transmission mechanism of a power tool disclosed herein includes a housing, a gearing unit disposed in the housing, and a switching unit; the gearing unit performs transmission between an electric motor and an output end; the switching unit includes a movable engaging member which is engaged with the gearing unit and movable relative to the gearing unit; a toothed limiter is formed unitarily on the housing; a limit groove is correspondingly formed on the movable engaging member; when the toothed limiter is snap-on engaged with the limit groove, the movable engaging member is disposed at a first engagement position; when the toothed limiter is snap-off disengaged from the limit groove, the movable engaging member is disposed at a second engagement position; a transmission ratio contributed to the gearing unit when the movable engaging member is disposed at the first engagement position is different from that contributed to the gearing unit when the movable engaging member is disposed at the second engagement position. Also disclosed is a grease gun driven by the transmission mechanism.

## Description

### FIELD

The subject matter described herein relates to a power tool, and more particularly relates to a transmission mechanism of a power tool; in addition, the subject matter described herein also relates to a grease gun comprising such transmission mechanism.

### BACKGROUND

In recent years, as the inventory of construction machinery in the domestic market grows, the demands on aftermarket services also increase; for example, electric grease applicators for applying lubricant greases to construction machinery have been gradually embraced by the market. Compared with hand-powered grease guns, electric grease guns are already welcomed in the market due to their advantages such as time saving, labor saving, high greasing pressure, and quick grease delivery. It is expected that electric grease guns will dominate the market in the future.

Existing electric grease guns are usually provided with only one operating position; without position selectivity, the lubricant grease can only be applied at a fixed speed and pressure, so that when facing different operating demands, their operating efficiency would be deteriorated, and they even cannot accomplish the greasing task; in such cases, it is needed to change another model of grease gun.

### SUMMARY

A transmission mechanism of a power tool and a grease gun are described herein to overcome a drawback in conventional electric grease guns that cannot switch shift positions due to only having one operating shift position.

A transmission mechanism of a power tool described herein comprises a housing, a gearing unit disposed in the housing, and a switching unit, wherein the switching unit comprises a movable engaging member which is engaged with the gearing unit and movable relative to the gearing unit; a toothed limiter is formed unitarily on the housing; a limit groove is correspondingly formed on the movable engaging member; when the toothed limiter is snap-on engaged with the limit groove, the movable engaging member is disposed at a first engagement position; when the toothed limiter is snap-off disengaged from the limit groove, the movable engaging member is disposed at a second engagement position; a transmission ratio contributed to the gearing unit when the movable engaging member is disposed at the first engagement position is different from that contributed to the gearing unit when the movable engaging member is disposed at the second engagement position.

In some implementations, the switching unit further comprises a shifting member, a sliding slot being circumferentially formed on the movable engaging member, the shifting member comprising a plug-in end, the plug-in end being plug-fitted in the sliding slot, the plug-in end being operable to drive the movable engaging member to the first engagement position or the second engagement position.

In some implementations, a rotational shaft is arranged on the housing, and a mating portion is arranged on the shifting member, the mating portion being sleeved on the rotational shaft.

In some implementations, the shifting member further comprises a drive end, and the switching unit further comprises an urging member, the urging member being operable to drive the drive end to push the plug-in end.

In some implementations, the urging member is movable relative to the housing, a slideway being formed on the urging member, the drive end being disposed in the slideway; the slideway comprises a first slideway end and a second slideway end; when the urging member moves so that the drive end is disposed at the first slideway end, the movable engaging member is disposed at the first engagement position; when the urging member moves so that the drive end is disposed at the second slideway end, the movable engaging member is disposed at the second engagement position.

In some implementations, the gearing unit comprises at least one planetary gearset, the planetary gearset comprising a sun gear and a plurality of planetary gears; the movable engaging member has an inner gear portion; when the movable engaging member is disposed at the second engagement position, the inner gear portion is engaged simultaneously with the sun gear and the plurality of planetary gears in a same planetary gearset; when the movable engaging member is disposed at the first engagement position, the inner gear portion is disengaged from the sun gear while maintaining engagement with the plurality of planetary gears.

In some implementations, the sun gear is a dual-gear comprising a bull gear portion and a pinion gear portion, the pinion gear portion being engaged with the plurality of planetary gears, the bull gear portion being engaged with the movable engaging member at the second engagement position and disengaged from the movable engaging member at the first engagement position.

The disclosure further provides a grease gun, comprising a gun body, a grease cartridge, an electric motor, and a plunger pump, the electric motor being disposed in the gun body, the grease gun being connected to the plunger pump, wherein the electric motor is connected to and drives the plunger pump via the transmission mechanism of a power tool according to any technical solution described *supra.*

In some implementations, a controller which is adjustable is provided on the gun body, the controller having a plurality of selectable shift positions; a motor speed measuring unit and a sensing switch are provided in the gun body, the sensing switch sensing a position at which the urging member or the movable engaging member is disposed.

In some implementations, the controller is a dial which is rotatable, a plurality of shift positions being set on the dial, the plurality of shift positions corresponding to a plurality of working modes of the grease gun; and by rotating the dial, a corresponding shift position is selected.

With the technical solutions described *supra,* the disclosure offers the following benefits.

By unitary design of the toothed limiter and the housing, the transmission mechanism of a power tool as described herein is contributed with higher strength and durability, as well as reduced cost of manufacturing and labor; by setting a plurality of engagement positions to the movable engaging member, the transmission mechanism is contributed with different transmission ratios when being engaged with the gearing unit at different positions, whereby the transmission mechanism offers a plurality of transmission output modes, which facilitates a user to select an appropriate working mode based on actual needs.

By setting the shifting member which comprises a plug-in end operable to drive the movable engaging member to the first engagement position or the second engagement position, it is convenient for the user to adjust the transmission mechanism via the shifting member so as to dispose the transmission mechanism in an appropriate output mode.

By setting a rotatable shaft on the housing and setting a mating portion on the shifting member, the shifting member, once being securely sleeved on the housing, is not easily disengaged from the housing.

The urging member serves as a lever, so that when the user drives the urging member to move the plug-in end which in turn drives the movable engaging member to an appropriate position, it becomes easier for the user to shift an output mode of the transmission mechanism.

The urging member is pushed to rotate along the housing to drive the movable engaging member to an appropriate position, which eases the user's shifting operation.

The planetary gearset transmission offers characteristics of planetary movement and power division, which may sufficiently utilize the large bearing capacity of the inner toothing and the entire accommodation space of the inner ring gear, contributing the transmission mechanism a compact structure, a small overall size, and a light weight; the sun gear is engaged with the plurality of planetary gears and shares load therewith, offering advantages such as high payload and large transmission ratio.

The grease gun disclosed herein adopts the transmission mechanism according to any of the technical solutions described *supra,* so that the grease gun has all benefits of the transmission mechanism.

### BRIEF DESCRIPTION OF THE DRAWINGS

Fig. 1 is a schematic diagram of a grease gun in some embodiments of the disclosure;
Fig. 2 is an exploded view of a transmission mechanism in some embodiments of the disclosure;
Fig. 3 is a schematic diagram of a housing of the transmission mechanism in some embodiments of the disclosure;
Fig. 4 is a schematic diagram of a movable engaging member of the transmission mechanism in some embodiments of the disclosure;
Fig. 5 is a schematic diagram of a sun gear in some embodiments of the disclosure;
Fig. 6 is a schematic diagram of a switching unit of the transmission mechanism in some embodiments of the disclosure;
Fig. 7 is a schematic diagram of the movable engaging member at a first engagement position in some embodiments of the disclosure;
Fig. 8 is a schematic diagram of the movable engaging member at a second engagement position in some embodiments of the disclosure;
Fig. 9 is an exposed view of a transmission mechanism according to an example implementation of the disclosure;
Fig. 10 is a schematic diagram of a transmission mechanism at a first engagement position according to an example implementation of the disclosure;
Fig. 11 is a sectional view of a transmission mechanism at a first engagement position according to an example implementation of the disclosure;
Fig. 12 is a schematic diagram of a transmission mechanism at a second engagement position according to an example implementation of the disclosure;
Fig. 13 is a sectional view of a transmission mechanism at a second engagement position according to an example implementation of the disclosure;
C is a positional schematic diagram of an urging member of the transmission mechanism and a gun body according to an example implementation of the disclosure;
Fig. 15 is a schematic diagram of a speed measuring unit in the embodiments of the disclosure.

### Reference Numerals:

100. gun body; 101. notch; 110. electric motor; 120. plunger pump; 130. grease cartridge; 140. controller; 200. transmission mechanism; 210. transmission mechanism housing; 211. toothed limiter; 212. rotational shaft; 220. planetary gearset; 221. sun gear; 2211. bull gear portion; 2212. pinion gear portion; 222. planetary gear; 223. planetary carrier; 230. switching unit; 231. shifting member; 2311. plug-in end; 2312. mating portion; 2313. drive end; 232. urging member; 2321. slideway; 2322. first slideway end; 2323. second slideway end; 240. movable engaging member; 241. limit groove; 242. inner gear portion; 243. sliding slot;
300. Hall sensor;
400. sensing switch.

### DETAILED DESCRIPTION OF EMBODIMENTS

Hereinafter, the technical solutions of the disclosure will be explained and illustrated through embodiments with reference to the accompanying drawings. However, the embodiments are only example embodiments of the disclosure, not all of them. Other embodiments derived by those skilled in the art without exercise of inventive work based on the examples in the embodiments all fall within the protection scope of the disclosure.

In the description of the disclosure, it needs to be understood that the orientational or positional relationships indicated by the terms such as "center," "longitudinal," "transverse," "length," "width," "thickness," "upper," "lower," "front," "rear," "left," "right," "vertical," "horizontal," "top," "bottom," "inner," "clockwise," and "counterclockwise" refer to those orientational and positional relationships illustrated in the drawings, which are intended only for facilitating description of the disclosure and simplifying relevant depictions, but not for indicating or implying that the devices or elements compulsorily possess such specific orientations or are compulsorily configured and operated with these specific orientations; therefore, such terms should not be construed as limitations to the disclosure.

Besides, the terms "first" and "second" are only used for descriptive purposes, which shall not be construed as indicating or implying relative importance or implicitly indicating the number of a referred to technical feature. Therefore, the features limited by "first" and "second" may explicitly or implicitly include one or more of such features. In the description of the present disclosure, unless otherwise indicated, "plurality" and "several" indicates two or above.

In the disclosure, unless otherwise explicitly provided and limited, the terms such as "mount," "connect," "couple," and "fix" should be understood broadly, which, for example, may refer to a fixed connection, a detachable connection, or an integrated connection, which may be a mechanical connection or an electrical connection, which may be a direct connection or an indirect connection via an intermediate medium, which may also be a communication between the insides of two elements. To a person of normal skill in the art, specific meanings of the above terms in the disclosure may be construed based on specific situations.

Hereinafter, the technical solutions in the embodiments of the disclosure will be described in a clear and comprehensive way with reference to the accompanying drawings in the embodiments of the disclosure. Apparently, the embodiments described herein are only part of the embodiments of the disclosure, not all of them. All other embodiments derived by a person of normal skill in the art based on the embodiments described herein without exercise of inventive work fall within the extent of protection of the disclosure.

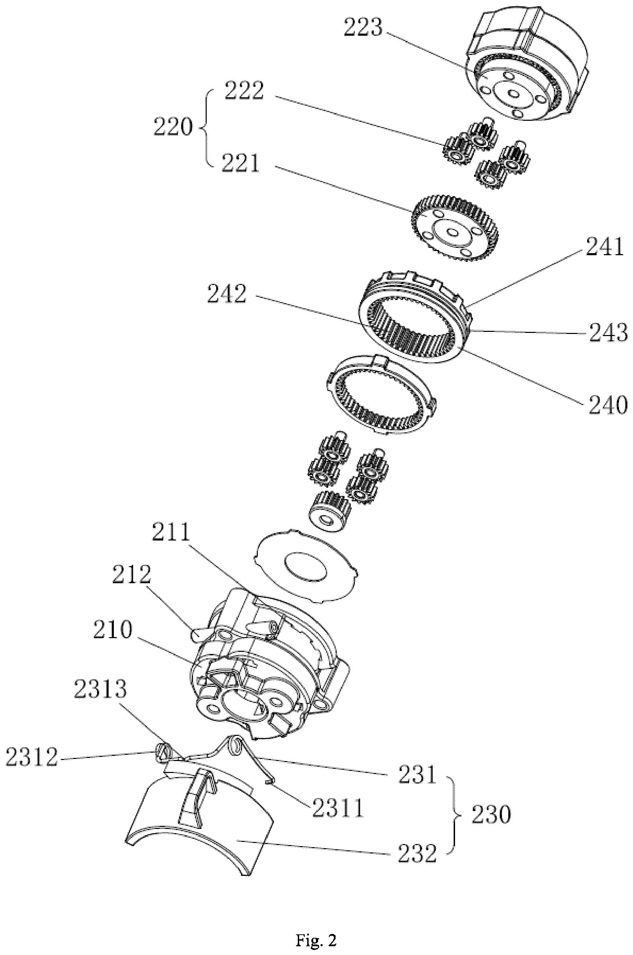

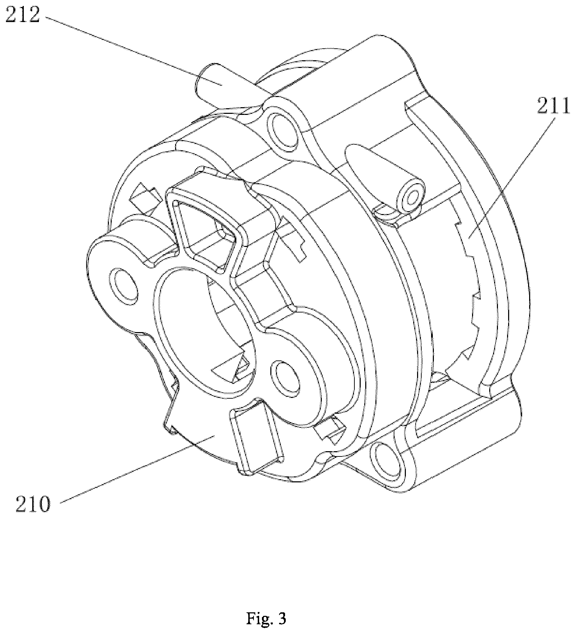

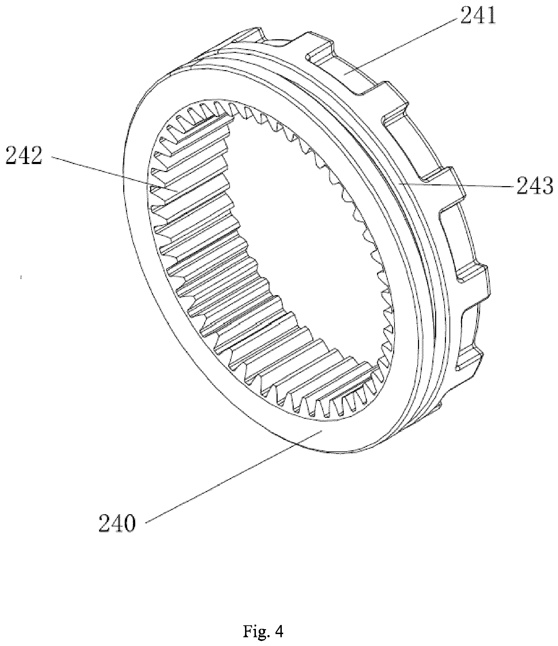

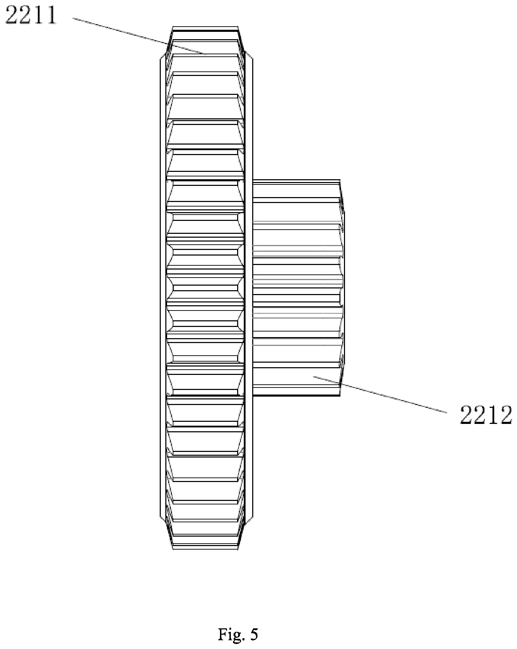

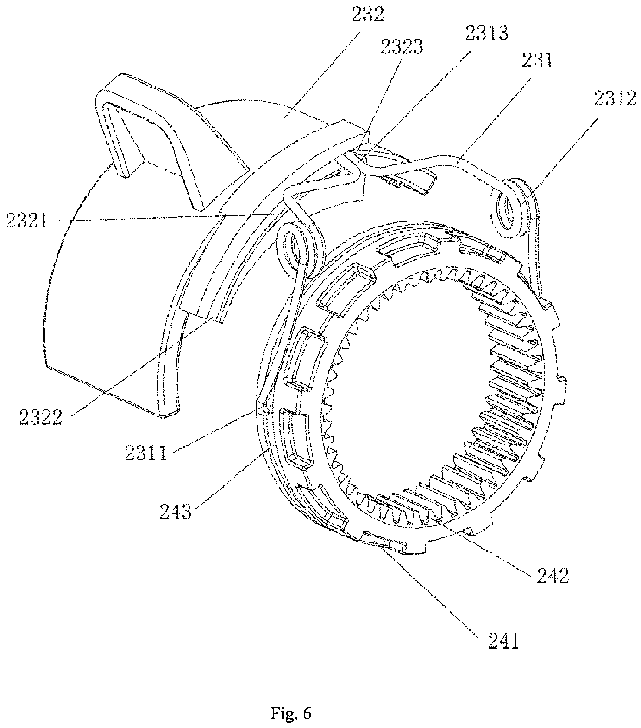

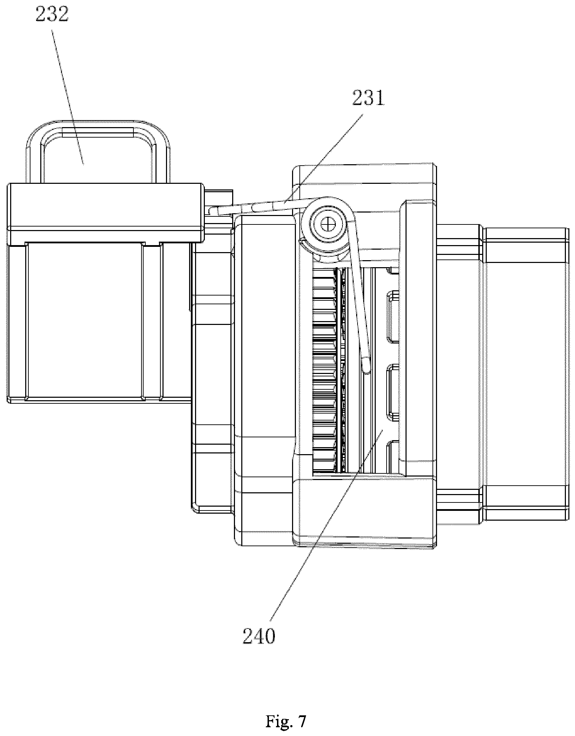

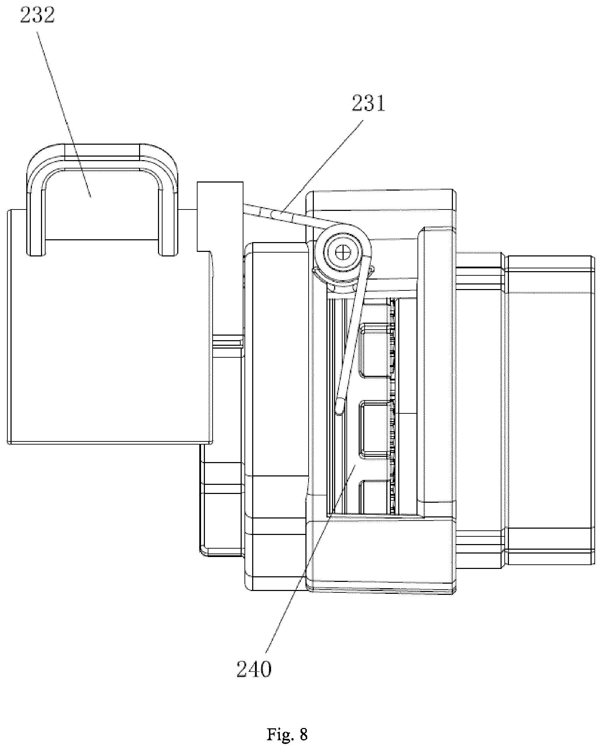

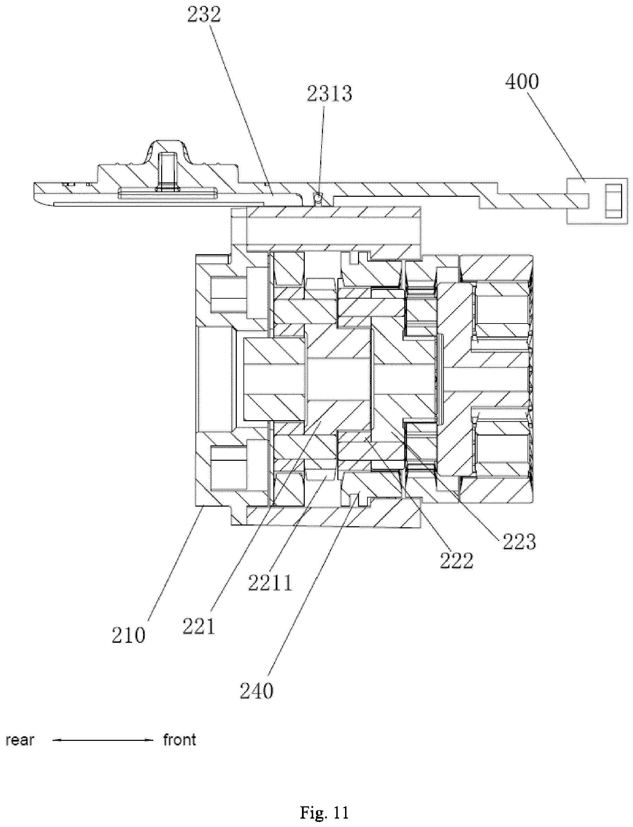

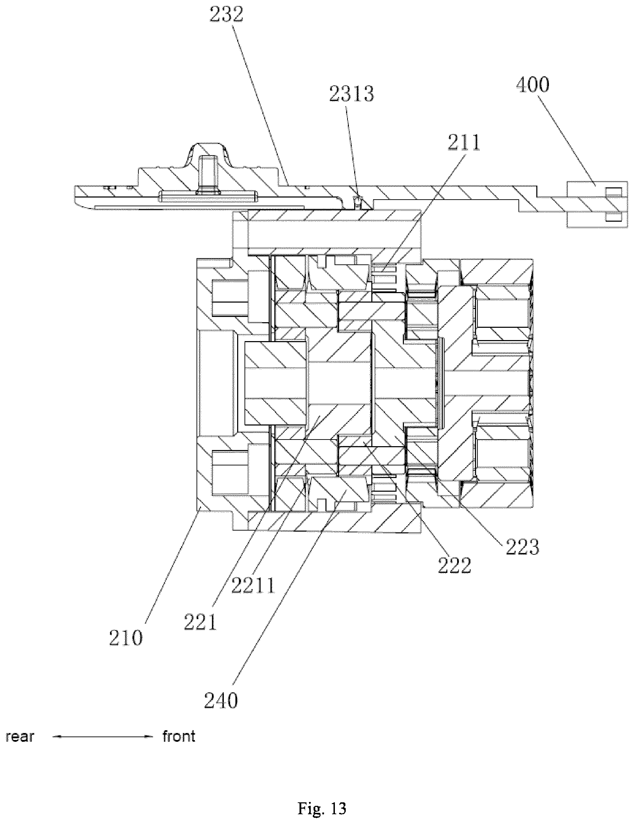

As illustrated in Figs. 2 to 13, embodiments of the disclosure provide a transmission mechanism of a power tool. The transmission mechanism 200 comprises a transmission mechanism housing 210, a gearing unit disposed in the transmission mechanism housing 210, and a switching unit 230. The switching unit 230 comprises a movable engaging member 240 engaged with the gearing unit, the movable engaging member 240 being axially movable relative to the gearing unit to thereby have a first engagement position and a second engagement position; a rotating speed outputted by the gearing unit when the movable engaging member 240 is disposed at the first engagement position is different from that outputted by the gearing unit when the movable engaging member 240 is disposed at the second engagement position, and a transmission ratio of the transmission mechanism when the movable engaging member 240 is disposed at the first engagement position is different from that of the transmission mechanism when the movable engaging member 240 is disposed at the second engagement position.

A toothed limiter 211 is unitarily formed on the transmission mechanism housing 210, and a limit groove 241 is correspondingly arranged on the movable engaging member 240. When the movable engaging member 240 moves to the first engagement position so that the toothed limiter 211 is snap-on engaged with the limit groove 241, the movable engaging member 240 cannot rotate relative to the transmission mechanism housing 210 and thusly cannot be engaged with the gearing unit; when the movable engaging member 240 moves to the second engagement position so that the toothed limiter 211 is snap-off disengaged from the limit groove 241, the movable engaging member 240 is engaged with the gearing unit and rotates, along with the gearing unit, relative to the transmission mechanism housing 210.

Compared with a separate design of the toothed limiter 211 and the transmission mechanism housing 210, the unitary design avoids a need of combining the two parts and also avoids the two parts from pressing against each other as well as friction created therebetween during operation; therefore, the unitary design offers higher strength and durability. In addition, the transmission mechanism housing 210 may be one-shot formed from engineering plastics by injection molding, which reduces the number of molds to make and eliminates a mounting procedure, and thusly can reduce the cost of molds and manufacturing as well as the cost of labor.

By setting the movable engaging member 240 having multiple engagement positions, different transmission ratios are provided when the movable engaging member 240 is engaged with the gearing unit at different positions, so that the transmission mechanism 200 offers a plurality of transmission output modes, which facilitates a user to select an appropriate working mode according to actual needs.

In some implementations, as illustrated in Figs. 2 to 13, the gearing unit comprises a planetary gearset 220, the planetary gearset 220 comprising a sun gear 221 and a plurality of planetary gears 222, the plurality of planetary gears 222 being mounted on a planetary carrier 223, the movable engaging member 240 having an inner gear portion 242. When the movable engaging member 240 moves to the second engagement position, the inner gear portion 242 is engaged simultaneously with the sun gear 221 and the plurality of planetary gears 222; in this case, the inner gear portion 242 co-rotates with the sun gear 221, the plurality of planetary gears 222 maintain stationary relative to the inner gear portion 242 and the sun gear 221, and the movable engaging member 240, the sun gear 221, and the plurality of planetary gears 222 rotate as a whole relative to the transmission mechanism housing 210; now, the planetary gearset 220 is speed-varying disabled, outputting a high-speed and low torque, and the planetary gearset 220 transmits the torque via the planetary carrier. When the movable engaging member 240 is disposed at the first engagement position, the inner gear portion 242 is disengaged from the sun gear 221 so as to be engaged with the plurality of planetary gears 222, while the movable engaging member 240, which is snap-on engaged with the transmission mechanism housing 210, cannot rotate; in this case, the plurality of planetary gears 222 are engaged with the sun gear 221 to transmit a torque via the planetary carrier 223; now, the planetary gearset 220 transmits at a reduced speed, outputting a low-speed, high torque.

The planetary gearset transmission has characteristics of planetary movement and power division, which may sufficiently utilize the large bearing capacity of the inner toothing as well as the entire accommodation space of the inner ring gear, contributing the transmission mechanism 200 with a compact structure, a small overall size, and a light weight; as the sun gear 221 and the plurality of planetary gears 222 are engaged to share loads, benefits such as high payload and large transmission ratio are achieved.

The planetary gearset as adopted has a high payload and a large transmission ratio, so that a high-speed motor may be adopted. Due to its high rotating speed and high power density, the high-speed motor has a size far smaller than a typical electric motor. The high speed motor has advantages such as small size, low price, and high control precision, and combined with the advantages of the planetary gearset such as a compact structure and a small overall size, the transmission mechanism can be made compact and small, which in turn reduces the overall size and overall weight of a power tool applying this transmission mechanism; meanwhile, the material and manufacturing costs of the transmission mechanism can also be reduced, whereby the prices of the transmission mechanism and the power tool applying the transmission mechanism can also be reduced.

In some implementations, the gearing unit comprises a plurality of planetary gearsets 220. The plurality of planetary gearsets 220 as provided further increase the transmission ratio; combined with the high-speed motor, the transmission mechanism is applicable to a power tool with a low-speed, large-torque output, thereby extending the application scope of the transmission mechanism.

In some implementations, as illustrated in Figs. 2 to 13, the sun gear 221 is a dual-gear comprising a bull gear portion 2211 and a pinion gear portion 2212, the pinion gear portion 2212 being engaged with the plurality of planetary gears 222, the bull gear portion 2211 being engaged with the inner gear portion 242 at the second engagement position and being disengaged from the inner gear portion 242 at the first engagement position.

In some other implementations, a plurality of planetary gearsets 220 may further be provided in the gearing unit so as to provide a transmission ratio required by the transmission mechanism 200.

Figs. 2 to 13 illustrate a transmission mechanism of a power tool according to an embodiment of the disclosure. The switching unit 230 further comprises a shifting member 231; a sliding slot 243 is formed circumferentially on the movable engaging member 240; the shifting member 231 comprises a plug-in end 2311; a notch for the plug-in end 2311 to pass through and move is further provided on the transmission mechanism housing 230, the plug-in end 2311 passing through the notch and being plug-fitted in the sliding slot 243; the user may drive the plug-in end 2311 to push the movable engaging member 240 to the first engagement position or the second engagement position.

By setting the shifting member 231 which comprises a plug-in end 2311 operable to drive the movable engaging member 240 to the first engagement position or the second engagement position, the user is enabled to adjust the transmission mechanism 200 via the shifting member 231 so that the transmission mechanism 200 is disposed in an appropriate output mode.

In some implementations, a rotational shaft 212 is provided on the transmission mechanism housing 210, and a mating portion 2312 is provided on the shifting member 231, the mating portion 2312 being sleeved on the rotational shaft 212.

By setting the rotational shaft 212 on the transmission mechanism housing 210, setting the mating portion 2312 on the shifting member 231, and sleeving the shifting member 231 on the transmission mechanism housing 210, the shifting member 231, once being secured on the transmission mechanism housing 210, is not easily detached therefrom.

The shifting member 231 further comprises a drive end 2313; the switching unit 230 further comprises an urging member 232 which drives the drive end 2313 to push the plug-in end 2311. The urging member 232 serves as a lever, when being pushed by the user, itdrives the plug-in end 2311 which in turn pushes the movable engaging member 240 to an appropriate position, so that the user can shift an output mode of the transmission mechanism 200 more easily.

As illustrated in Figs. 2 to 8, in some implementations, the urging member 232 is circumferentially rotatable relative to the transmission mechanism housing 210; a slideway 2321 is formed on the urging member 232, the drive end 2313 being disposed in the slideway 2321 and operable to slide in the slideway 2321; the slideway 2321 has a first slideway end 2322 and a second slideway end 2323; rotating the urging member 232 allows for the drive end 2313 to slide to the first slideway end 2322 to dispose the movable engaging member 240 at the first engagement position, and rotating the urging member 232 allows for the drive end 2313 to slide to the second slideway end 2323 to dispose the movable engaging member 240 at the second engagement position. A distance between the second slideway end 2323 and the movable engaging member 240 is greater than a distance between the first slideway end 2322 and the movable engaging member 240, so that when the urging member 232 is pushed to dispose the drive end 2313 at the second slideway end 2323, the drive end 2313 is uplifted, and the shifting member 231 rotates with the rotational shaft 212 as the fulcrum to pull the plug-in end 2311 which in turn pulls the movable engaging member 240 to the second engagement position; when the urging member 232 is pushed to dispose the drive end 2313 at the first slideway end 2322, the drive end 2313 is lowered, and the shifting member 231 rotates with the rotational shaft 212 as the fulcrum to push the plug-in end 2311 which in turn pushes the movable engaging member 240 to the first engagement position. The user's shifting action is eased by pushing the urging member 232 to rotate along the transmission mechanism housing 210 to drive the movable engaging member 240 to an appropriate position.

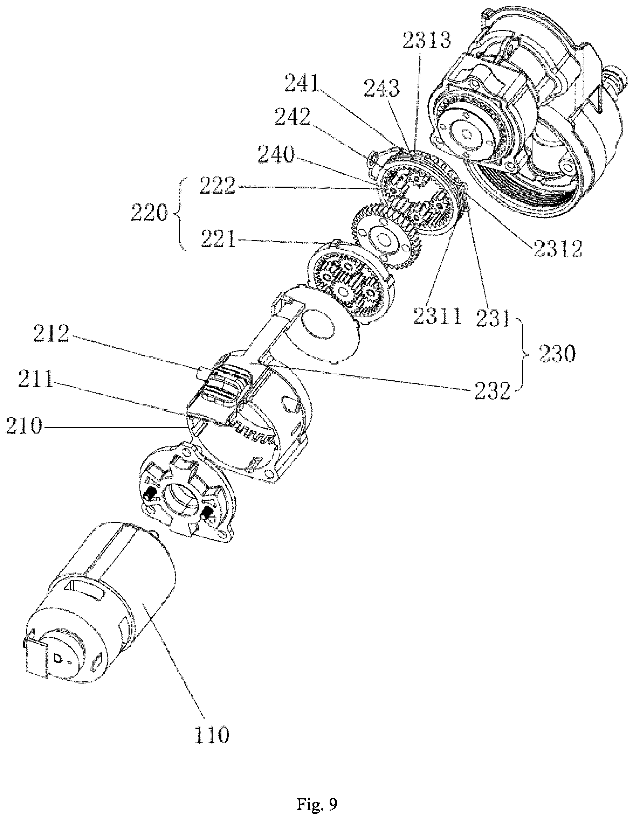

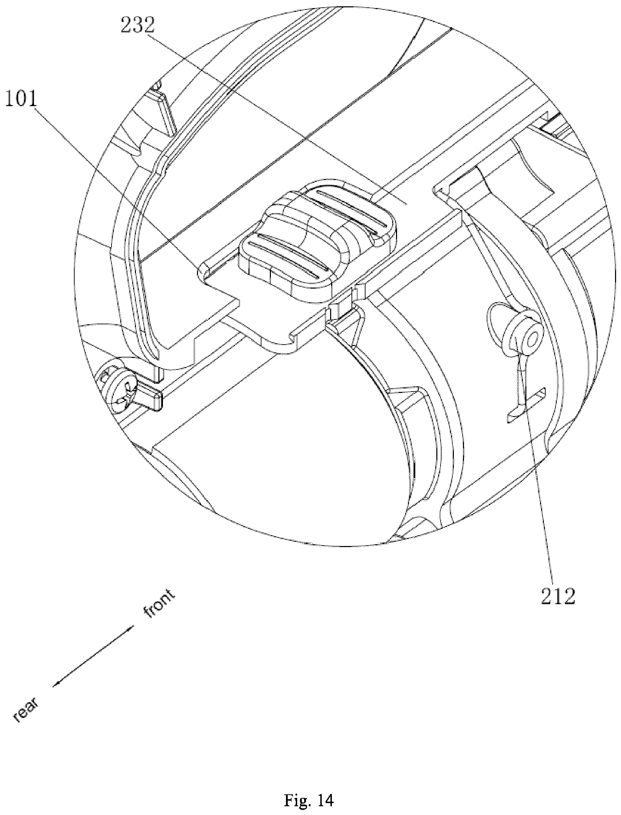

Figs. 9 to 14 illustrate another example embodiment, in which the urging member 232 is forward and rearward movable relative to the transmission mechanism housing 210, and a notch 101 for the urging member 232 to move is formed on a gun body 100; the urging member 232 is exposed on the gun body 100 via the notch 101, allowing for the urging member 232 to move forward and rearward along the notch 101, which facilitates an operator to push the urging member 232 to move forward and rearward. The slideway 2321 has a first slideway end 2322 and a second slideway end 2323. By pushing the urging member 232 to move rearward along the notch 101, the drive end 2313 can be driven to move in a same direction, and the shifting member 231 rotates along the rotational shaft 212 so that the plug-in end 2311 pushes the movable engaging member 240 to move forward till the first engagement position. By pushing the urging member 232 to move forward along the notch 101, the drive end 2313 can be driven to move in a same direction, and the shifting member 231 rotates along the rotational shaft 212 so that the plug-in end 2311 pushes the movable engaging member 240 to move rearward till the second engagement position. By pushing the urging member 232 to move forward and rearward along the transmission mechanism housing 210 to thereby bring the movable engaging member 240 to an appropriate position, the user's shifting action is eased.

An embodiment of the disclosure provides a power tool, which is driven by the transmission mechanism according to any of the implementations described *supra.* The power tool disclosed herein may refer to a grease gun, a power drill, a power hammer, and an electric screwdriver, etc.

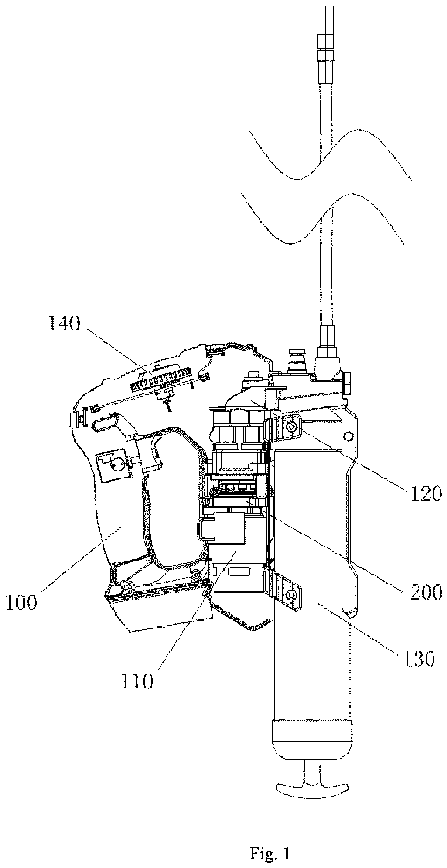

As illustrated in Fig. 1, a grease gun described herein comprises a gun body 100, a grease cartridge 130, an electric motor 110, a plunger pump 120, and the transmission mechanism 200 as described *supra,* the electric motor 100 being disposed in the gun body 100, the grease cartridge 130 being secured on the gun body 100, the grease cartridge 130 serving to store grease, the plunger pump 120 being connected to the grease cartridge 130; the electric motor 110 is connected to and drives the plunger pump 120 via the transmission mechanism 200; the plunger pump 120 comprises an eccentric wheel and a plunger; power outputted by the electric motor 110 is transmitted to the eccentric wheel, rotation of the eccentric wheel brings the plunger to move reciprocally up and down, whereby grease is drawn from the grease cartridge 130 and discharged to a grease outlet nozzle. A control module for controlling the electric motor 110 is further provided within the gun body.

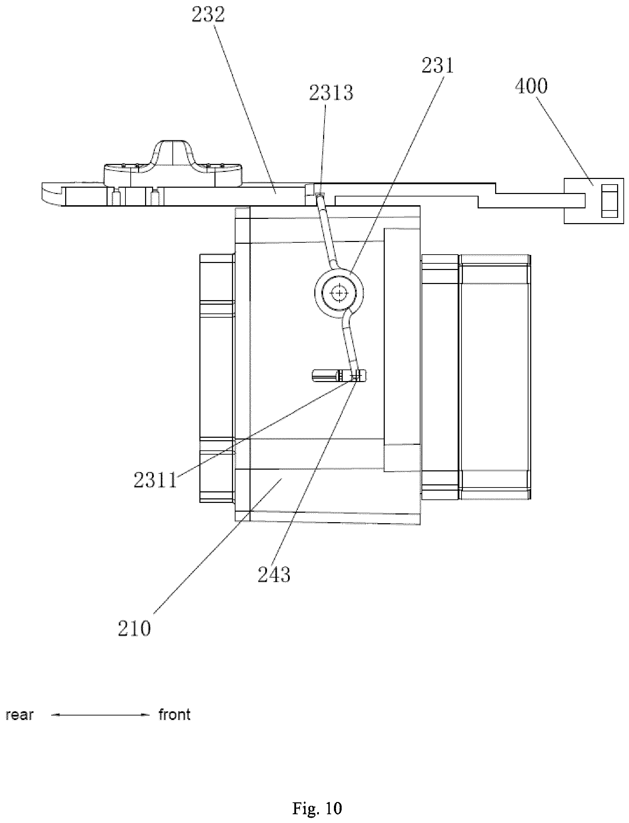

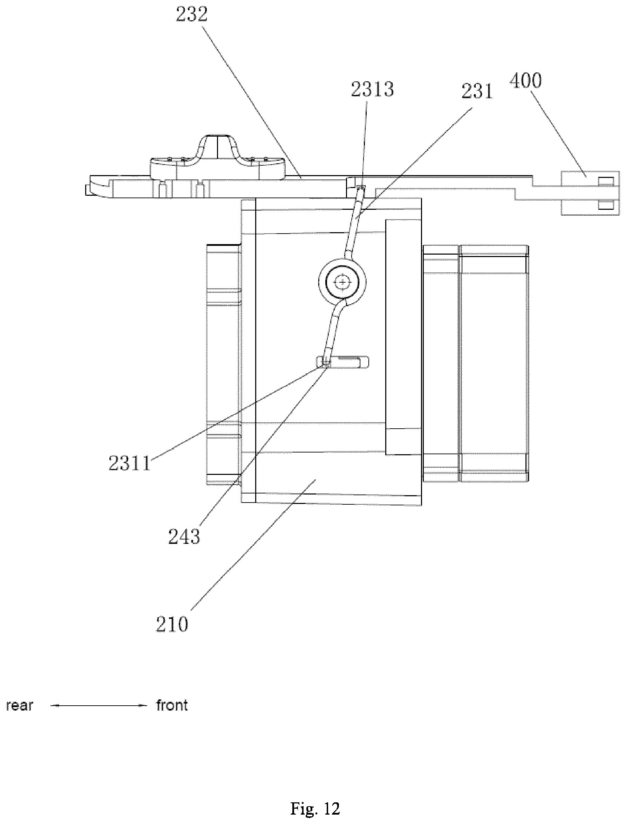

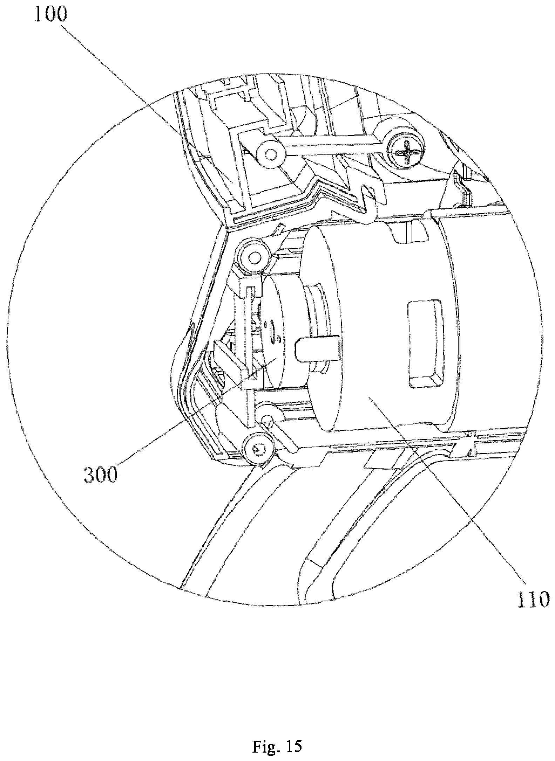

As illustrated in Fig. 1, Figs. 10 to 13, and Fig. 15, the grease gun described herein differs from the one described in the preceding embodiment is that a motor speed measuring unit and a sensing switch 400 for sensing whether the movable engaging member 240 is disposed at the first engagement position or the second engagement position are further provided in the gun body 100. The speed measuring unit comprises a magnet disposed on the electric motor and a Hall sensor 300 electrically connected to the control module; the electric motor drives the magnet to rotate, and the Hall sensor 300 senses variation of the magnetic field to emit a pulse signal to the control module. The sensing switch 400 is electrically connected to the control module, as illustrated in Figs. 10 and 12; the sensing switch 400 senses the position of the urging member 232 and emits a corresponding position signal to the control module. An adjustable controller 140 is further provided on the gun body, the controller 140 being electrically connected to the control module; the controller 140 has a plurality of selectable modes for the user to select, the plurality of selectable modes corresponding to different working states of the grease gun. The control module has a plurality of mating modes to correspond to the plurality of selectable modes of the controller 140 and a plurality of combined states formed by switch-on or switch-off of the sensing switch.

In some other implementations, the sensing switch 400 may also sense a position of the movable engaging member 240 and emit a corresponding position signal to the control module.

The electric motor comprises a motor shaft, a follower portion being secured on the motor shaft, the magnet being secured on the follower portion to co-rotate with the electric motor. The Hall sensor 300 is securely mounted in the gun body 100; when the rotating magnet moves closer or away from the Hall sensor 300, variation of magnetic field intensity is induced, and the Hall sensor 300 senses the variation of magnetic field intensity to emit a corresponding pulse signal to the control module. The control module has a plurality of mating modes; the control module controls operation of the electric motor 110 based on the selected mode and the received pulse signal.

The plurality of selectable modes may be different greasing amounts. The control moule matches a corresponding number of rotating cycles of the electric motor via the sensing switch 400 based on the mode selected by the user; the Hall sensor 300 may sense the number of rotating cycles of the operating electric motor; when the user selects a corresponding mode and trigger the switch, the grease gun starts greasing till a corresponding amount, and then the grease gun stops operating; the different working states of the grease gun may also comprise a normally-ON mode, in which the user triggers the switch, and the grease gun works continuously till the user deactivates the switch.

In some implementations, the controller 140 may be a rotatable dial, a plurality of shift positions being set on the dial, the plurality of shift positions corresponding to a plurality of working modes of the grease gun; and by rotating the dial, a corresponding shift position may be selected. In some other implementations, the controller may also adopt a counter, a rotary knob, or a plurality of press buttons with different functions.

What have been described above are only example embodiments of the disclosure; however, the protection scope of the disclosure is not limited thereto. A person skilled in the art should understand that the disclosure includes, but is not limited to, the contents described in the drawings and the embodiments. Any modifications without departing from the functions and structural principles of the disclosure will be included within the scope of the claims.

## Claims

1. A transmission mechanism of a power tool, comprising a housing, a gearing unit disposed in the housing, and a switching unit, wherein the switching unit comprises a movable engaging member which is engaged with the gearing unit and movable relative to the gearing unit; a toothed limiter is formed unitarily on the housing; a limit groove is correspondingly formed on the movable engaging member; when the toothed limiter is snap-on engaged with the limit groove, the movable engaging member is disposed at a first engagement position; when the toothed limiter is snap-off disengaged from the limit groove, the movable engaging member is disposed at a second engagement position; a transmission ratio contributed to the gearing unit when the movable engaging member is disposed at the first engagement position is different from that contributed to the gearing unit when the movable engaging member is disposed at the second engagement position.

2. The transmission mechanism of a power tool according to claim 1, wherein the switching unit further comprises a shifting member, a sliding slot being circumferentially formed on the movable engaging member, the shifting member comprising a plug-in end, the plug-in end being plug-fitted in the sliding slot, the plug-in end being operable to drive the movable engaging member to the first engagement position or the second engagement position.

3. The transmission mechanism of a power tool according to claim 2, wherein a rotational shaft is arranged on the housing, and a mating portion is arranged on the shifting member, the mating portion being sleeved on the rotational shaft.

4. The transmission mechanism of a power tool according to claim 3, wherein the shifting member further comprises a drive end, and the switching unit further comprises an urging member, the urging member being operable to drive the drive end to push the plug-in end.

5. The transmission mechanism of a power tool according to claim 4, wherein the urging member is movable relative to the housing, a slideway being formed on the urging member, the drive end being disposed in the slideway; the slideway comprises a first slideway end and a second slideway end; when the urging member moves so that the drive end is disposed at the first slideway end, the movable engaging member is disposed at the first engagement position; when the urging member moves so that the drive end is disposed at the second slideway end, the movable engaging member is disposed at the second engagement position.

6. The transmission mechanism of a power tool according to claim 1, wherein the gearing unit comprises at least one planetary gearset, the planetary gearset comprising a sun gear and a plurality of planetary gears; the movable engaging member has an inner gear portion; when the movable engaging member is disposed at the second engagement position, the inner gear portion is engaged simultaneously with the sun gear and the plurality of planetary gears in a same planetary gearset; when the movable engaging member is disposed at the first engagement position, the inner gear portion is disengaged from the sun gear while maintaining engagement with the plurality of planetary gears.

7. The transmission mechanism of a power tool according to claim 6, wherein the sun gear is a dual-gear comprising a bull gear portion and a pinion gear portion, the pinion gear portion being engaged with the plurality of planetary gears, the bull gear portion being engaged with the movable engaging member at the second engagement position and disengaged from the movable engaging member at the first engagement position.

8. A grease gun, comprising a gun body, a grease cartridge, an electric motor, and a plunger pump, the electric motor being disposed in the gun body, the grease gun being connected to the plunger pump, wherein the electric motor is connected to and drives the plunger pump via the transmission mechanism of a power tool according to any of claims 1 to 3, and 6 to 7.

9. The grease gun according to claim 8, wherein a controller which is adjustable is provided on the gun body, the controller having a plurality of selectable shift positions; a motor speed measuring unit and a sensing switch are provided in the gun body, the sensing switch sensing a position at which the movable engaging member is disposed.

10. The grease gun according to claim 9, wherein the controller is a dial which is rotatable, a plurality of shift positions being set on the dial, the plurality of shift positions corresponding to a plurality of working modes of the grease gun; and by rotating the dial, a corresponding shift position is selected.

11. A grease gun, comprising a gun body, a grease cartridge, an electric motor, and a plunger pump, the electric motor being disposed in the gun body, the grease cartridge being connected to the plunger pump, wherein the electric motor is connected to and drives the plunger pump via the transmission mechanism of a power tool according to claim 4 or 5.

12. The grease gun according to claim 11, wherein a controller which is adjustable is provided on the gun body, the controller having a plurality of selectable shift positions; a motor speed measuring unit and a sensing switch are provided in the gun body, the sensing switch sensing a position at which the urging member or the movable engaging member is disposed.

13. The grease gun according to claim 12, wherein the controller is a dial that is rotatable, a plurality of shift positions being set on the dial, the plurality of shift positions corresponding to a plurality of working modes of the grease gun; and by rotating the dial, a corresponding shift position is selected.
